Europäisches Patentamt

European Patent Office

Office européen des brevets

(11) Publication number: **0 055 725**
**B1**

## EUROPEAN PATENT SPECIFICATION

(45) Date of publication of patent specification: **28.01.87**

(51) Int. Cl.⁴: **F 26 B 13/24** // D21F5/00

(21) Application number: **81901820.1**

(22) Date of filing: **23.06.81**

(86) International application number:
**PCT/FI81/00050**

(87) International publication number:
**WO 82/00192 21.01.82 Gazette 82/03**

(54) **DRYING PROCEDURE AND MEANS.**

(30) Priority: **01.07.80 FI 802106**

(43) Date of publication of application:
**14.07.82 Bulletin 82/28**

(45) Publication of the grant of the patent:
**28.01.87 Bulletin 87/05**

(84) Designated Contracting States:
**AT DE FR GB SE**

(56) References cited:
**DE-B-2 422 817**
**DE-B-2 502 149**
**SE-B- 418 801**
**US-A-2 436 028**
**US-A-3 968 571**

(73) Proprietor: **Valmet Oy**
**Punanotkonkatu 2**
**SF-00130 Helsinki 13 (FI)**

(72) Inventor: **LAMPINEN, Markku**
**Rautsuonkatu 17**
**SF-20740 Turku 74 (FI)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

The present invention concerns a process for drying a porous weblike material such as paper, slurry material such as peat, solid material such as wood. Furthermore, the invention concerns a means for carrying out the process.

A process and a means according to the preambles of claims 1 and 4, respectively, are known from DE—A—24 22 817.

In the known process, the material to be drained is mud. The permanently liquid-saturated porous suction surface structure consists of a layer of sand and/or gravel on the bottom of a basin filled with mud. Drainage pipes filled with liquid pass through this layer. The liquid in the pipes is kept under sub-pressure so as to drain off the liquid from the drainage pipes and to remove liquid from the mud in this manner. For the same purpose, a mud-particle retaining, water-permeable layer material is applied onto the mud, the liquid being above this layer and being also subjected to sub-pressure so as to drain off the water from the mud through the layer material and to thicken the mud.

By this known process and the known means provided to carry out this process, liquid can be drained from the material until the solid particles of the material rest against each other. However, liquid cannot be drained in this manner from the spaces between the solid particles of the material. Thus the degree of drying is restricted.

The known process is not suited for drying of for instance a paper web on a paper machine. As known in the prior art, a paper web is dried to begin with by dewatering on a fabric such as wire or between two fabrics to moisture content ($gH_2O$ per g dry matter) $u_v=5,7 \ldots 2,3$, depending on the paper brand. Subsequently, removal of water from the web takes place in the press section of the paper machine by pressing the web in roll nips, in which as a rule a porous felt is also used towards dewatering. In the press sections of the paper machine, the drying is to moisture content $u_v=1,6 \ldots 1,2$. After the press section, drying of the paper web is accomplished by evaporation, using e.g. multiple cylinder dryers, where the web to be dried is placed in contact with steam-heated smooth-surfaced drying cylinders. The ultimate moisture content of the paper ranges $u_v=0,05 \ldots 0,1$. However, drying by evaporation consumes remarkable quantities of energy (the energy of evaporation of water is about 2500 kJ/kg).

It is the object of the invention to develop the process according to the preamble of claim 1 in such a way that a higher degree of drying is achieved and that the drying is achieved with as little expenditure of energy as possible. Besides, a means improved in this same sense shall be provided.

This object is achieved according to the invention with view to the process by the features in the characterizing portion of claim 1, and with view to the means by the features in the characterizing portion of the claim 4.

It is provided in the process according to the invention that the material to be dried is, on its one side, in hydraulic connection with the liquid subjected to sub-pressure, while gas or air can get to the material to be dried on its other side. In this manner, the sub-pressure in the liquid not only sucks the liquid from the material to be dried but, at the same time, sucks the gas or air into the spaces which were filled with liquid before. Thus the achievable degree of dryness is considerably higher than in the case of the known process. A sucking of gas or air through the material to be dried is prevented by the fact that the pore size in the porous structure and the sub-pressure are coordinated in such a way that the sub-pressure does not suffice to suck the liquid against the capillary pressure from the capillaries or pores of the porous structure. This is important insofar as the sucking of greater amounts of air through the material to be dried would cause a considerable expenditure of energy. In the case of the invention, however, the expenditure of energy is small, because after the sucking off of liquid, further air is not sucked into the material to be dried.

The term "permanently liquid-saturated porous suction surface structure" is within the scope of this invention understood to mean that air (or gas on the whole) cannot permeate the suction surface structure with the differential pressures between air and liquid applied in the drying process. This constitutes a decisive difference between the drying process of the present invention and drying processes known in the prior art. In previously known suction drying processes (e.g. suction rolls on a paper machine) also air passes through the suction surface in addition to liquid. This implies that the air also passes through the object that is being dried, and the drying is ultimately based on friction between liquid and air. For the friction to be the highest possible, which is visible as differential pressure of air across the object to be dried, the air flow must be major. This in turn implies high energy expense, and even in spite of all this no good drying results are attained by such means (on the paper machine, for instance, only the moisture content $u_v=2,3$ has been reached).

Further, a process of drying material is known from US—A—2 436 028 wherein the material to be dried is brought into contact with a porous suction surface structure wherein a suction chamber is located.

On the side which is not in contact with the porous structure, the material to be dried is exposed to ambient air so that air is admitted there. Liquid is drained from the material to be dried solely by capillary effect. The liquid sucked into the pores resp. capillaries is sucked out of the pores by the sub-pressure in said suction chamber 2. The suction chamber is mostly filled with air and the aim is to remove the liquid from pores resp. capillaries by sucking before the capillaries come again into contact with the material to be dried.

In this connection it has to be emphasized that the process and means of the invention are applicable, and have been intended, for the drying also of materials other than paper although in the description following hereinafter interest is mainly centred on paper drying, and an example is also given of the drying of peat. There may be mentioned, among the various applications of the drying process and means of the invention as non-restrictive examples, various textile webs, leather, various sheet and board products, the greatest variety of weblike products, granular and powdery products such as products of the chemical industry, fodders, peat and equivalent. It should be further emphasized that the liquid constituting the object of drying by the process of the invention may be, apart from water, even altogether another. But since water is the most important application, we shall with a view to a concrete discourse, in the disclosure part, consider dewatering in the first place.

The invention shall be clarified in the following, referring to certain examples of the invention, presented in the drawings of the attached figures. In addition, certain diagrams illustrating the background of the invention are presented in the attached figures.

Fig. 1 displays the water pressure in newsprint, determined by the so-called mercury method.

Fig. 2 presents, schematically, an apparatus for research of the water suction drying system of the invention.

Fig. 3 shows results of experiment, relating to the invention, obtained with a certain porous board.

Figs. 4a and 4b present, in two mutually perpendicular projections, a cylinder-type water suction drying means carrying out the invention.

Fig. 5 illustrates the contact between water surface and paper.

Fig. 6a illustrates the grouping of water molecules in unrestricted volume.

Fig. 6b illustrates the grouping of water molecules adjacent to cellulose.

Fig. 7a presents the difference between the Helmholtz energies of water bound in beech wood and free water.

Fig. 7b presents the difference of the Helmholtz energies between the dry beech wood surface and the wood material behind the surface.

Fig. 8 illustrates the cellulose molecule.

In Fig. 9 is shown the permeability to infra-red radiation of distilled water and of newsprint.

Fig. 10 presents a three-stage drying section of a paper machine or equivalent, based on water suction drying.

Fig. 11 illustrates the effect of over-pressure on the drying result when using a certain nylon film.

Fig. 12 shows, in principle, another three-stage water suction drying means, for instance a paper machine drying section.

Fig. 13 illustrates, by a principle diagram, the pressure-boosted water suction drying.

Fig. 14 presents, by a principle diagram, the drying of peat on a water suction drying roll.

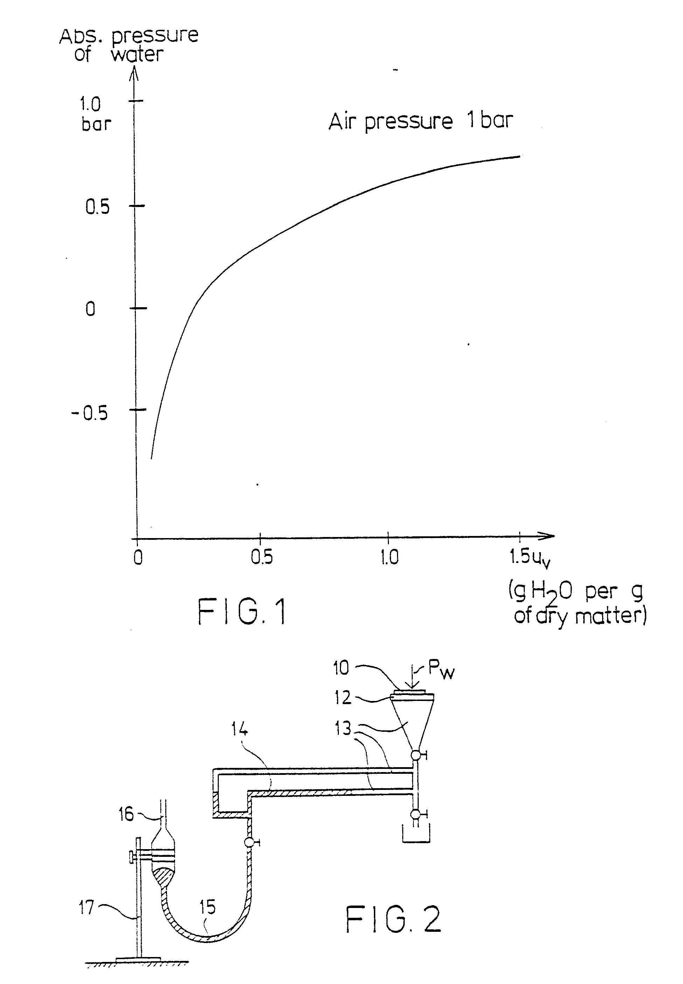

The water resides in the wet paper sheet on the surface of the sheet, in the interfibre pores, and in the fibres. When the moisture content is so high that there is water also on the surface of the sheet, the pressure of the water equals the pressure of ambient air. With diminishing water quantity in the sheet, the pressure of the water simultaneously decreases. At very minimal moisture contents, the pressure of the water may in fact be negative, implying that the water is then in its entirety in a tensile stress state. In Fig. 1 is shown the pressure of water in newsprint. The pressure of the water was determined by the so-called mercury method in newsprint with T=20°C and ambient air pressure 1 bar. (Prepared on the basis of data received from the laboratories Keskuslaboratorio Oy.).

In the following shall be described the main principle of the drying process of the invention, referring to the experimental set-up shown in Fig. 2.

A highly dense sinter plate 12 has been saturated with water and below this plate there is water which has been placed under subatmospheric pressure of considerable height by either a syphon or pump system (in Fig. 2, by lowering one end of the mercury column). However, the microcapillaries in the sinter plate 12 are not emptied, in spite of the subatmospheric pressure, because this is inhibited by the surface forces between water and sinter plate. If the radius of the largest pore in the sinter plate 12 is R, then the water retention capacity of the sinter plate 12, that is the highest sub-atmospheric pressure $\Delta p$ which can be imposed on the water while the plate still remains water-saturated, can be calculated by the formula:

$$\Delta p = \frac{2\gamma \cos \theta}{R} \qquad (1)$$

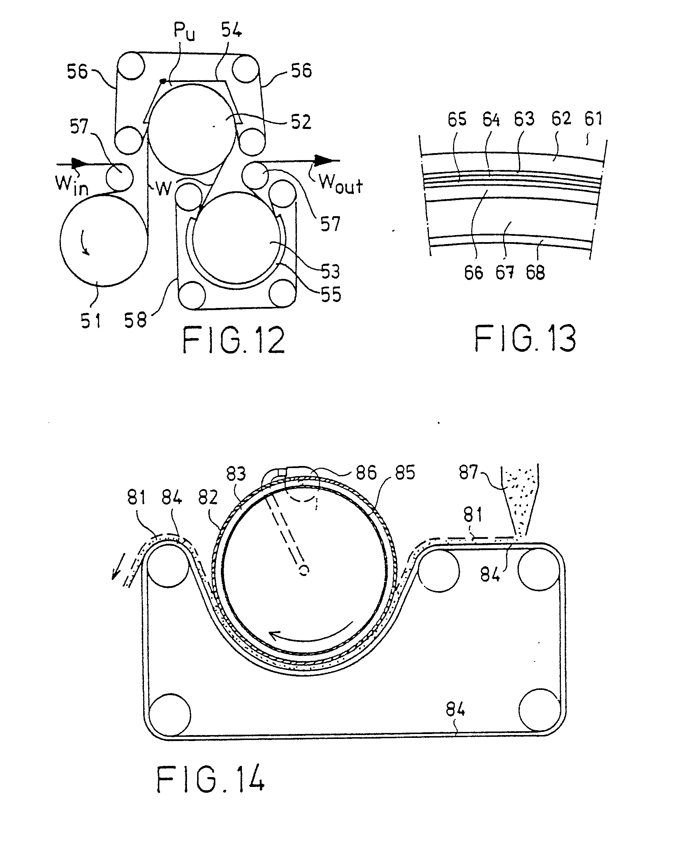

where: $\gamma$=surface tension of the water, and $\theta$=contact angle between water surface and sinter surface. We find from formula (1) that if the pore radius is 1,2 μm and the contact angle is 30°, then the maximum subpressure for water at 20°C is 1 bar ($\gamma$=70 · $10^{-3}$N/m). When a wet paper 10 or another equivalent porous object to be dried is placed upon the sinter plate 12, the water in the sinter plate 12 and in the paper 10 will constitute a coherent water layer, and since the pressure of the water in and below the sinter plate 12 is low, water will begin to flow out from the paper 10 and through the sinter plate 12. This water flow will cease when the paper 10 has become so dry that the pressure of the water therein is the same as the pressure of the water under the sinter plate 12. In Fig. 2, 13 is a water volume, 14 are mercury columns, and 15 is a rubber tube.

The finer the structure of the sinter plate 12 or other equivalent porous plate component, the higher are the subpressures which can be contemplated without incurring the risk that the pores of the plate 12 would be emptied, and the greater is also the dryness of the paper 10 which is achievable. If under the plate 12 the water can be placed under 0,9 bar subatmospheric pressure, then is it theoretically possible to attain the value $u_v=0,3$, as can be seen from Fig. 1.

It is possible in principle, by the process of the invention, to dry paper or another equivalent object to be dried altogether without thermal drying. To wit, Fig. 1 basically reveals the difference between the pressures of water and air, and if now the pressure of the air is made 2 bar instead of 1 bar, we find that with absolute pressure 0,1 bar of the water the value $u_v=0,08$ can be theoretically attained. An arrangement of this kind implies that the sinter plate has such fine pores that its water retention capacity is $\Delta p>1,9$ bar, in other words, $R<0,6$ µm if $\theta=30°$. The saturated water pressure at 20°C is 0,023 bar; no pressure lower than this can be imposed on the water because then the water begins to boil.

Example 1

With the measuring equipment of Fig. 2 certain experiments were carried out, the results of which shall be described in the following.

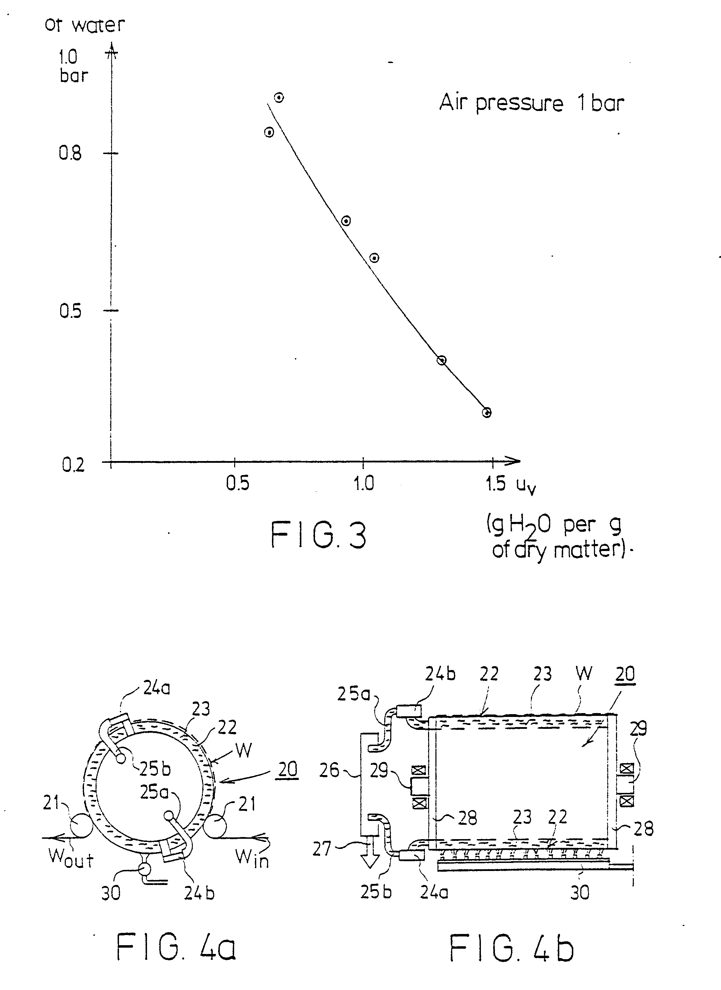

By lowering one end 16 of the mercury tube in the stand 17, the desired underpressure is generated in the water volume 13. Fig. 3 presents the results of measurement which were obtained using for plate 12 a ceramic plate of the brand "Diapor" (Trademark). The "Diapor" ceramic plate is manufactured of earth silicates. The plate is manufactured by Schumacher (Bietigheim, German Federal Republic). The largest pores in this ceramic plate are 1—2 µm (pore diameter), the average pore size is 0,8—1,5 µm, and the porosity of the plate (the gas volume proportion in the dry plate) is 0,42—0,53. It should be particularly noted that the porosity at the same time indicates the perforation proportion of the end face of plate 12, that is the reaction of the surface area which is saturated with water in the drying situation. It is thus obvious that the sinter plate 12 should have the highest possible porosity so that suction might take place on the largest possible area.

In Fig. 3 are shown the results of measurement obtained with the "Diapor" plate. The best result with this plate ($u_v=0,64$) was achieved by urging the paper against the sinter plate with non-water-absorbing soft rubber of 4 mm thickness with pressure about 1 bar.

Example 2

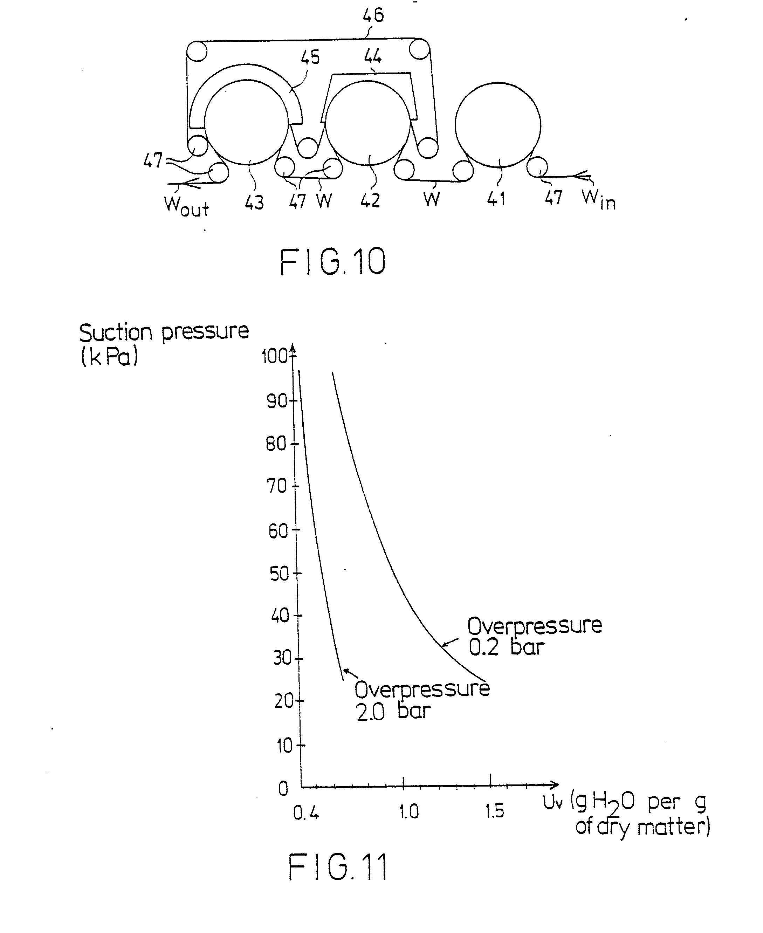

Another film that has been tested for building up the water surface is a nylon film (Nylon-66, Polyamide, Pall, England) which has a water retention capacity even greater than the ceramic plate just described and which has a rather high porosity, about 80%. Since the film is very thin (less than about 1 mm and usually only 0,1 mm), its flow resistance is very low—a notable circumstance with a view to the paper machine application for instance, where the drying time is exceedingly short (see Example 3). Fig. 11 reveals the results of experiment obtained with this film, with two different air pressures $p_{u1}=1,2$ bar and $p_{u2}=3,0$ bar (pressures in absolute figures).

Example 3

The speed of the paper machine is 1000 m/min, and the water suction cylinder carrying out the procedure of the invention has diameter 1,8 m and covering angle 270°. If newsprint (45 g/m²) dries from moisture content $u_v=1,5$ to $u_v=0,64$, let us calculate from these figures the water flow velocity through the overlaying film (Example 2) of the water suction cylinder. The drying time will then be

$$\Delta t=\frac{\pi \cdot 1,8 \cdot 270/360}{1000/60}=0,25 \text{ s}$$

and the water flow velocity (average):

$$v=\frac{0,045 \cdot (1,5-0,64)}{1000 \cdot 0,25} \text{ m/s}=0,15 \text{ mm/s}$$

Thus, we may note that the nylon film of Example 2 has a permeability which is fully sufficient—according to tests that have been carried out, the velocity of 0,15 mm/s is already reached with 0,03 bar differential pressure. The nylon film in the present case requires a porous material to be placed under it (porosity preferably at least the same, 80%), which lends adequate mechanical support to the film.

Example 4

With the experimental arrangement of Fig. 2, experiments were also carried out on peat. The peat sample was Sphagnum peat acquired from Keinusuo bog in Loimaa (company Vapo), which is well known to dry with greater difficulty than sedge peat. The peat sample was transferred directly from the bog in wet state into a plastic bag. The sample was ground at the laboratory of the Pansio Works, in wet condition, between two bricks, and it was then placed in the water suction drier. The porous surface employed was parchment paper, against which the peat was urged with rubber, with pressure about 10 bar. The pressure of the water was adjusted to be 0,21 bar. The result obtained was $u_v=0,82$. When the urging pressure was on the order of 1—2 bar, the result obtained was $u_v=1,13$. The air pressure was 1 bar in both tests, and the drying time, 30 seconds. It may be mentioned that the value $u_v=0,82$ represents 45% moisture content if the moisture content is referred to the wet weight, and this is already such a high figure that in this state the peat is already fit to be directly burned.

In the following shall be described the significance of centrifugal force in the carrying out of the process of the invention.

We consider a rotating water system, with velocity on the outer periphery at radius $R_2$ equalling v. In that case, the water pressure prevailing on the outer periphery is higher by $\Delta p$ than the pressure on the inner radius, anf this is calculable by the following formula:

$$\Delta p = \frac{\rho \cdot v^2}{2} \cdot \left(1 - \left(\frac{R_1}{R_2}\right)^2\right) \qquad (2)$$

Let be $v=16,7$ m/s, $R_2=0,9$ m and permissible differential pressure $\Delta p=0,05$ bar. From formula (2) then follows that $R_1=0,884$ m and therefore the maximum allowable water layer thickness is 16 mm. This implies at the same time that water withdrawal from the rotating cylinder cannot be arranged to the cylinder centre except in the case that the centre is stationary, and it must instead be disposed on the cylinder periphery.

In Figs. 4a and 4b has been shown the principle design solution, in cylinder embodiment, of the water suction drying according to the invention.

In Figs. 4a and 4b is shown a cylinder-type water suction drying means, which the paper web $W_{in}$ enters, conducted by the guide roll 21. The web W runs on the surface of the cylinder 20 and departs ($W_{out}$), conducted by an other guide roll 21, after lapping the water suction surface 22 of the cylinder 20 on an angle which is preferably in excess of 180°. The cylinder surface is a water suction surface 22, a fine porous cylinder surface of the kind described, and which immediately communicates with the water volume 23. The water volume 23 encircles the cylinder 20 and extends over its entire breadth. To the water volume 23 have been connected two water pumps 24a and 24b revolving along with the cylinder and affixed to one end 28 of the cylinder, while the other end 28 is closed. The cylinder 20 rotates, carried by its journal pins and bearings 29. The suction pumps 24a and 24b have been fitted with drain pipes 25a and 25b, which communicate with a stationary draining connector 26, whence the water departs by the pipe 27. Electricity is supplied to the pumps 24 by means of carbon rings mounted on the cylinder shaft.

It may be mentioned that if the water suction rate is at the figure mentioned, 0,15 mm/s, and if the water volume 23 has the height 15 mm and the cylinder 20 has the breadth 8 m, the water flow velocity in the end aperture of the water volume 23, in a system with unilateral water withdrawal, will be 0,08 mm/s, whereby it appears that no difficulties should be encountered in providing for uniform water suction in the breadth dimension of the cylinder 20.

With a view to high water retention capacity, the porous counter-surface 12; 22 should have very small pores, less than 1 μm in size. Even bacteria are no longer admitted by such small pores. Thus one may observe that no solid particles whatsoever, such as zero fibres for instance, can penetrate into the porous surface 12; 22 and they remain on its surface. It is thus enough to perform the cleaning of the porous surface 12; 22 by external rinsing, for instance with a water jet 30, disposed between the guide rolls 21 (Fig. 4) on the underside of the cylinder 20.

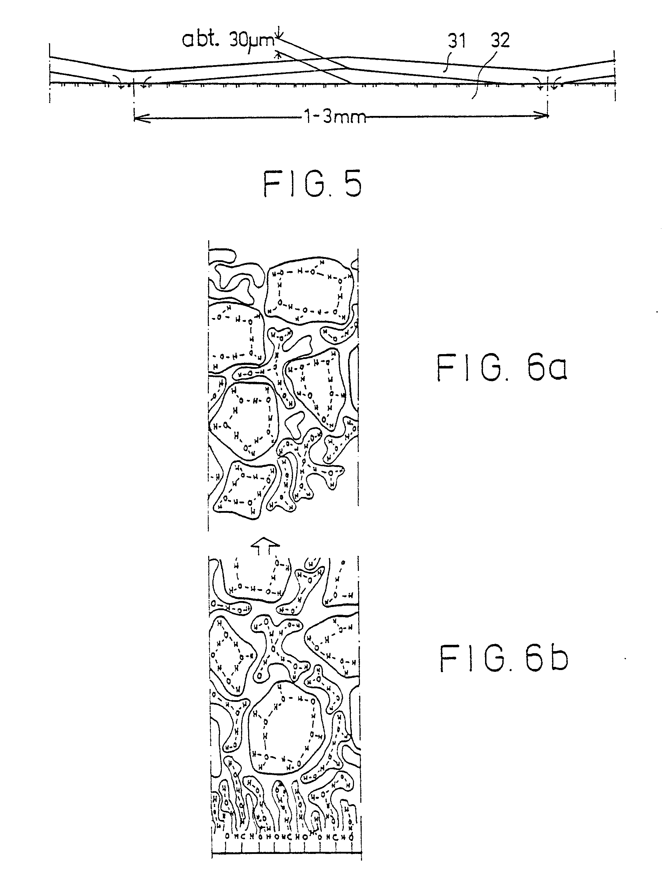

Since paper is made of fibres having in the first place approximately cylindrical shape (diameter about 30 μm and length 1—3 mm), it is obvious that the paper surface is not even closely a mathematical plane. As a consequence, only few points of the paper are in immediate contact with the water suction surface. This situation is illustrated by Fig. 5. The surface profile configuration was measured on the applicant's appointment at the Technical College of Turku in December, 1979. The profile curve is for the direction at right angles to the direction of travel of the web.

In Fig. 5 is depicted the contact between water suction surface 32 and paper 31.

Since the water suction according to the invention can only act on those points which are in mechanical contact with the water suction surface, it follows that a substantial part of the water that has to be removed is compelled to flow parallelling the plane of the paper, from areas between contact points to the points of contact. One might therefore surmise that owing to this fact thicker paper would be better to dry than thin paper brands. This inference has been corroborated by experiments already carried out, although the differences in drying behaviour between fine paper and newsprint have been exceedingly minor.

It is thus to advantage, with a view to achieving a uniform suction effect, if the water suction surface 12; 22; 32 applied in the invention is resilient, adapting itself to the surface of the paper or equivalent. In addition to the advantage that hereby higher dryness of the paper is achieved, the drying will also take place quite more swiftly in that case. The water flow in the direction of the paper plane, through the distance of just one millimetre, takes quite a long time, and this may become a limiting factor for the speed of the entire drying procedure of the invention. If a design solution of the nylon film type is used (Example 2), it is advantageous to place under the nylon film a resilient porous material course, and this in its turn is placed upon a foraminous steel shell. The softness of said material course should not be exaggerated however, since the distance of elastic travel is very small, as Fig. 5 reveals, and since then the pores of the water suction surface 12; 22; 32 might be occluded by being compressed. It is also conceivable that by using a nylon film of suitable thickness one may hereby render the surface resilient enough.

By pressing the paper, or other equivalent object to be dried, with great force against the water suction surface, a greater number of points of the paper are brought into contact against the suction surface and the paper will thus be made dryer. This too has already been experimentally verified.

It is also of primary importance, on the side of pressing, that air can flow in to replace the water that has been removed from the paper or equivalent. This circumstance has manifested itself in the experiments in that when the paper was pressed down with rubber which transmitted no air at all, the paper remained significantly wetter than in the case that air-permeable rubber was used. The phenomenon is well understandable if one thinks of the paper as composed of small tubular cavities which are emptied at one end, while replacement air flows in at the other. If no air can flow into the tube, a vacuum is produced therein and this prevents the outflow of water.

As can be seen in Fig. 11, the paper can be made dryer when the air pressure ambient to the paper ($p_u$) is high. By pressurizing ($p_u$) the further advantage is gained that hereby the water flow can be accelerated. In order to illustrate this fact, we may note as an example that a tubular hollow space of which the water-filled end has been placed against a water suction surface and where compressed air is introduced into the emptied end will empty swiftly for the reason that a "pull" is exerted at one end and a "push" at the other.

It is therefore to advantage to press down heavily on the paper or equivalent object to be dried with a porous material, for instance with porous rubber, through which at the same time pressurized air is conducted. This may be carried out in a number of alternative ways in practice.

In order to clarify the physical limiting values for the drying process of the invention, a description is given in the following of the state of water in paper or in another equivalent porous material.

The water molecule has an electric dipole, by reason of which the positive end (the hydrogen-side end) of the molecule turns towards the negative end of the neighbouring molecule. Hereby a weak bond is created between two water molecules. Since this phenomenon is only observable in substances containing hydrogen, the bond is called a hydrogen bond. The hydrogen bonds impede the motion of water molecules. If there were no hydrogen bonds, water would already boil at −100°C, and it would thus be a gas at room temperature. Owing to the hydrogen bonds, water molecules form chains, and for this reason thus the boiling point of water is indeed a couple hundred degrees higher than which it would be in the absence of hydrogen bonds. What has been said is valid for so-called free water which has been able to shape itself without any disturbing external factors, one of which is for instance cellulose. Fig. 6a displays the grouping of water molecules in the free state and Fig. 6b, in the adjacence of cellulose.

It is thus understood that in the adjacence of cellulose stronger hydrogen bonds are created between water molecules than those existing between water molecules at a greater distance from the cellulose, in free water. This implies in connection with the water suction drying of the invention that when water is being drawn by suction away from cellulose, the water will break at the weakest bond and thereby the water bound to the surface of the cellulose will remain in the paper. "Unselected" increasing of the temperature brings no substantial improvement.

It is true that the bonds to cellulose weaken with rising temperature, but the hydrogen bonds between free water molecules are equally weakened, and therefore the water also breaks more easily than before. It could be noted in laboratory experiments connected with the invention that heating in a warm water bath, prior to water suction drying, of the paper sample to be dried had no appreciable effect on the drying.

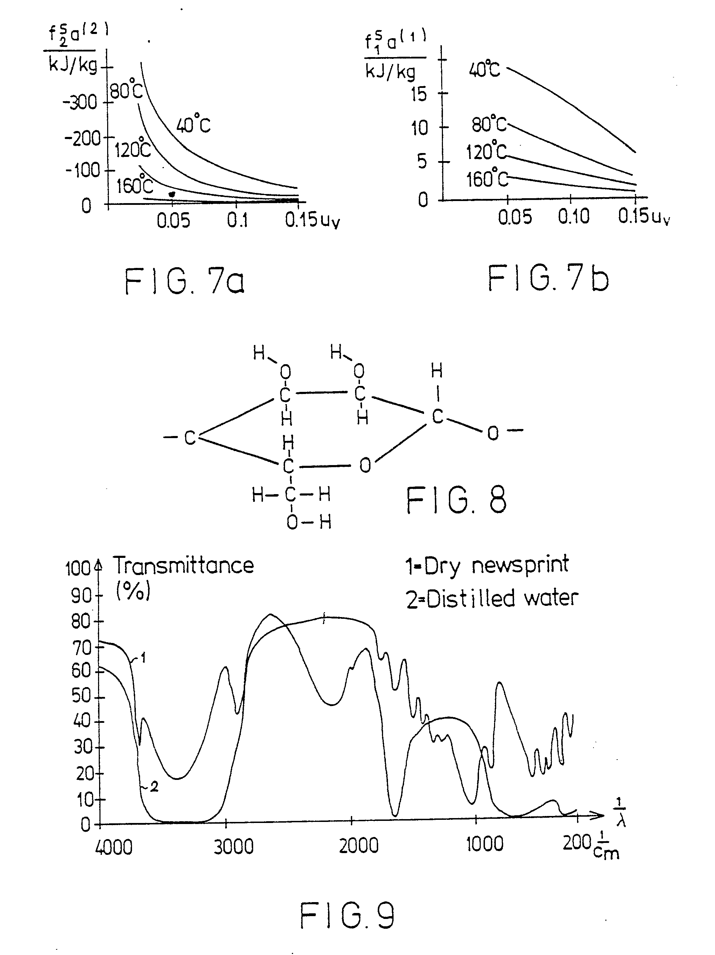

In order to gain an idea of the order of magnitude, Figs. 7a and 7b shall be presented, showing the surface energies calculated for beech wood. (Reference: Markku J. Lampinen: Mechanics and Thermodynamics of Drying—A Summary, Second International Symposium on Drying, McGill University, Montreal, 6.7.—9.7.1980).

Fig. 7a displays the difference of the Helmholtz energies $f_2^s a^{(2)}$, of water bound to beech wood and of free water.

Fig. 7b displays the difference of the Helmholtz energies, $F_1^s a^{(1)}$ of the surface of dry beech wood and of the wood material behind the surface.

Let, as an example, $f_2^s a^{(2)} = -50$ kJ/kg at a given moisture content and at a given temperature. We calculate, from this, the amount of work required to detach one water molecule from the sphere of influence of a cellulose molecule. The work required to detach one kilomole is

$$W = 18 \cdot 50 = 900 \text{ kJ/kmol} = 900 \text{ J/mol}$$

and therefore the work required to detach one molecule.

$$W = 900 \text{ J}/6{,}02 \cdot 10^{23} = 1{,}5 \cdot 10^{-21} \text{J}$$

If it is desired to dry the paper up to its ultimate dryness by the water suction drying of the invention, a certain external work is thus required to detach the water molecules within the sphere of influence of cellulose molecules. This work is naturally in an altogether different order of magnitude from the evaporation of water (cf. 50 kJ/kg vs. the evaporation energy of water, 2500 kJ/kg). In the foregoing one expedient was already mentioned by which this external work can be performed (in addition to the water suction work), namely, the use of compressed air to "push" the water towards the water suction.

One mode of boosting the drying process of the invention which is worthy of attention, apart from compressed air, is the use of infrared radiation when the radiation is effective either in the range of bending and/or vibration frequency of the bond of carbon and O-H or in the range of the elongation frequency of the bond between O-H and the water molecule. Fig. 9 displays the transmittance of distilled water and of newsprint for infrared radiation. Removal of the water molecules which are bound to cellulosic OH groups is indispensable (at least of part of them) when paper is being dried as far as to moisture content $u_v = 0,1$. This is evident from Fig. 7b (which concerns beech wood, to be sure) in that

**0 055 725**

the Helmholtz energy of the surface has a value greater than zero. This may also be established by molecular considerations.

The cellulose molecule has the chemical formula $(C_6H_{10}O_5)_n$ with $n=2,5$ to $10\times10^5)$, presented in Fig. 8. Let us assume that in the cellulose molecule each OH group binds one water molecule. Then, for one cellulose molecule, three water molecules can be bound. Let the number of cellulose molecules be the equivalent of one glucose unit. This quantity has the weight 162 g and thus thereto is bound the water quantity $3 \cdot 18$ g=54 g. The moisture content is then $u_v=54/162=0,33$. Thus by considerations at the molecular level one may also convince oneself that paper already contains a significant amount of completely dry cellulose surface at moisture content $u_v=0,1$.

The use of high frequency oscillators for drying is in itself a technology alread known and tried out. The crucial difference between the embodiment of the invention presented next and the dryers known in prior art is that in the invention an electric field is applied to introduce only that energy which is required to weaken the bonds between cellulose and water to such extent that the water can be removed mechanically, that is, by water suction as taught by the inventin. As has been said, this energy is merely a fraction of the energy which evaporation requires, and therefore the size and power rating of the apparatus will likewise be only a fraction of the high frequency driers in present use in which the dewatering is effected by evaporation. Another significant difference is the selection of frequency. The aim in high frequency driers of prior art is to set the water molecule in rotation, whereas in the idea presented here the primary aim is to affect the bond between cellulose and water. When the temperature of the solid matter rises, the bonding force between water and cellulose becomes less, as Fig. 7a reveals. Experiments have indisputably demonstrated the significance of infrared radiation. In the experiment a wet paper specimen was placed upon a ceramic sinter plate, against which the paper was pressed with the aid of a glass plate. When the pressure of the water was adjusted to be 0,08 bar, the paper could be dried to moisture content $u_v=0,16$. Due to the water-saturated ceramic plate below and the window glass sheet above, no water could escape from the paper by evaporation. This was furthermore verified by a separate test.

Preliminary laboratory tests associated with the invention have shown that the water suction drying need not be performed in one single step. In other words, even if the paper is taken off the water suction surface in between, the suction drying can be continued if desired without any detriment resulting herefrom to the drying efficiency. On this basis, the multiple cylinder dryer of Fig. 10 has been designed, which contains three kinds of water suction cylinders.

The first cylinder 41 removes the large water quantities up to moisture content $u_v=0,8 \ldots 1,0$. The cylinder 41 would be rather simple: it merely comprises a stripped water suction system according to the invention, without auxiliary equipment. The second cylinder 42 has been fitted with a compressed air booster 44, by which the range $u_v=1,0 \ldots 0,8$ to $0,3 \ldots 0,5$ would be dried. In measurements, the result $u_v=0,30$ has been achieved with the aid of compressed air, with $p_u=21$ bar and pressure of water under the water suction surface 0,34 bar. In contiguity with the third cylinder 43 has been constructed, in accordance with the principle described above, a high frequency field to shake the bonds. It can be assumed that hereby the moisture content $u_v=0,1$ will be reached. (At the moment, the figure of 0,16 has been reached).

In Fig. 12 is shown a modification of the apparatus of Fig. 10. The apparatus of Fig. 12 comprises on the incoming side $W_{in}$ of the web W, a water suction cylinder 51 without boosters, whereupon the web W goes to a compressed air-boosted water suction cylinder 52. In connection with the cylinder 52 is provided an over-pressure chamber 54, the overpressure $p_u$ prevailing therein being used to boost the dewatering action in the manner already described. In connection with the cylinder 52, the web W is pressed from the outside with a fabric 56 which is permeable to compressed air and consists of porous rubber or equivalent, by virtue of which the web W is urged tightly against the water suction surface of cylinder 52, for instance against a fine porous nylon film such as has been described above.

The web W is conducted by guide rolls 57.

From the cylinder 52, the web W goes to the water suction cylinder 53, where the water suction is boosted with infrared radiation, which is directed on the outside of the web W with apparatus 55, which has only been schematically indicated. On the cylinder 53, a belt 58 is employed to apply pressure, which is well transparent to infrared radiation. From the cylinder 53, the web W departs ($W_{out}$), conducted by one of said guide rolls 57.

Fig. 13 is a principle diagram illustrating the compressed air-boosted water suction drying. The compressed air volume 61 is bounded by a porous rubber band 62, through which the compressed air is admitted to act on the paper 63. At the same time, the rubber band 62 serves as pressing member, and by effect of the rubber band 62 the paper web 63 is urged tight against the water suction surface 64, for instance a nylon film as described. The pore size of the film 64 is preferably less than 0,2 μm. The apparatus includes a base surface 65 with high porosity (a felt or sinter metal), which is comparatively hard so that the pores might not be occluded by pressing. Under the surface 65 is a foraminous steel sheet 66, followed by the water volume 67 and a steel plate 68.

Fig. 14 illustrates the drying of peat with a water suction dryer. In Fig. 14, 81=peat layer, 82=water suction surface, 83=water volume, 84=press felt, 85=steel jacket, 86=water pump, and 87=peat input from the grinder. The water suction roll 82, 83, 85 is lapped from below by the felt 84, upon which the peat 81 to be dried enters between the roll and the felt 84. The felt 84 presses a thin peat course, a few millimetres in thickness, against the fine porous water suction surface 82, through which the water flows by effect of the subatmospheric pressure in the water volume 83. From the water volume 83, the water is drawn off with the aid of the water pump 86 revolving on the periphery. The output side of the water pump 86 has been connected with a moving joint to the cylinder centre, whereby the water extracted from the peat may be conducted by a stationary pipeline to desired location. If it is desired to use higher contact pressures on the felt 84 or equivalent belt, it will be necessary to place thereunder either pressing rollers, or, alternatively, a pressurized volume.

## Claims

1. Process for drying a porous weblike material such as paper, slurry material such as peat, solid material such as wood, wherein the material to be dried is placed on its one side in hydraulic connection with a liquid under subpressure with reference to the material to be dried by means of a permanently liquid-saturated porous suction surface structure, characterized in that while drying, air or gas is admitted to the other side of the material, and in that the pore size of said porous suction surface structure is selected such that said subpressure does not suffice to empty the porous suction surface structure of the liquid against capillary forces acting within said porous suction surface structure, even when said gas or air is in direct contact with said porous suction surface structure (22; 64; 82).

2. Process according to claim 1, characterized in that the suction and drying action is boosted by an over-pressure action onto the other side of the material to be dried.

3. Process according to one of the claims 1 and 2, characterized in that the drying action is boosted by directing on the material to be dried a radiation which is absorbed in said material.

4. Means for carrying out the process for drying a porous weblike material such as paper, slurry material such as peat, solid material such as wood according to claim 1, comprising a permanently liquid-saturating porous suction surface structure (22; 64; 82) for contacting one side of said material and means which in their contiguity define a liquid volume (23; 83) which communicates with pump means (24a; 24b; 86) creating a sub-pressure in said liquid volume, said liquid volume being in direct hydraulic connection with one side of said porous suction surface structure, characterized in that the radii R of the pores of said porous suction surface structure lie mainly within the range from 0,05 μm to 2 μm.

5. Means according to claim 4, characterized in that in connection with the material (W) to be dried there are radiation means (45; 55) by which a radiation having high intensity in a wavelength range which is absorbed by the solid matter of said material to be dried is directed on said material.

6. Means according to claim 4 or 5, characterized by a porous permeable member, for instance a resilient permeable rubber band, fabric or equivalent (146; 56; 62; 84), serving as a press by which the material (W; 63; 81) to be dried is tightly urged against the porous suction surface structure (64; 82).

7. Means according to claim 4, 5 or 6, characterized in that the porous suction surface structure (22; 64; 82) consists of a sinter film or a microporous nylon film or equivalent having a film thickness less than about 1 mm.

8. Means according to claim 4, 5, 6 or 7 for drying porous weblike material, characterized by at least one cylinder (20, 41, 42, 43; 51, 52, 53; 85) of which the outer surface has been provided with said porous suction surface structure (22; 82) on the inside of which is confined said liquid volume (23; 83) connected to said pump means (24a, 24b; 86) and by connectors (25a, 25b, 26) providing a connection to a water draining passage (27).

9. Means according to claim 8, characterized in that on that sector of said cylinder (42; 52) on which the material (W) to be dried laps the cylinder surface there is an over-pressure chamber (44; 54).

10. Means according to claim 8 or 9, characterized in that on that sector of said cylinder (20) which is not lapped by said material (W) there are water jet means (30) by which the porous suction surface structure (22) is cleaned (Figs. 4a and 4b).

11. Means according to claim 9 or 10, characterized in that, seen in the direction of travel of said material, there are provided a first, a second and a third cylinder (41, 42, 43; 51, 52, 53), the first cylinder (41; 51) being a water suction cylinder without boosting, the second cylinder (42; 52) being a compressed air-boosted cylinder and the third cylinder (43; 53) being a water suction cylinder boosted with infrared radiation.

12. Means according to claim 11, characterized in that on the second and/or third cylinder (42, 43; 52, 53) is used a permeable fabric or band (46; 56) by which the material (W) is urged against the porous suction surface structure of this cylinder (42, 43; 52, 53).

## Patentansprüche

1. Verfahren zur Trocknung eines porösen, gewebeartigen Materials, etwa Papier, eines schlammigen Materials, etwa Torf, oder eines festen Materials, etwa Holz, wobei das zu trocknende Material auf seiner einen Seite mittels einer permanent flüssigkeitsgesättigten porösen Saugoberflächenstruktur in hydraulischer Verbindung mit einer unter Unterdruck bezüglich des zu trocknenden Materials stehenden Flüssigkeit gesetzt wird, dadurch gekennzeichnet, daß während des Trocknens Luft oder ein Gas auf die andere Seite des Materials aufgebracht wird und daß die Porengröße der porösen Saugoberflächenstruktur so gewählt ist, daß der Unterdruck nicht ausreicht, um die poröse Saugoberflächenstruktur der Flüssigkeit entgegen den Kapillarkräften, die innerhalb der porösen Saugoberflächenstruktur wirken, zu entleeren, selbst wenn das Gas oder die Luft in direktem Kontakt mit der porösen Saugoberflächenstruktur (22, 64, 82) steht.

2. Verfahren nach Anspruch 1, dadurch gekennzeichnet, daß der Absaug- und Trocknungsvorgang mittels einer Überdruckwirkung auf der anderen Seite des zu trocknenden Materials verstärkt ist.

3. Verfahren nach einem der Ansprüche 1 und 2, dadurch gekennzeichnet, daß der Trocknungsvorgang verstärkt ist, indem auf das zu trockende Material eine Strahlung, die in dem Material absorbiert wird, gerichtet wird.

4. Vorrichtung zur Durchführung des Verfahrens zur Trocknung eines porösen, gewebeartigen Materials, etwa Papier, eines schlammigen Materials, etwa Torf, oder eines festen Materials, etwa Holz, gemäß dem Anspruch 1, mit einer permanent flüssigkeitsgesättigten porösen Saugoberflächenstruktur (22, 64, 82) zum Kontakt mit einer Seite des Materials und einer Vorrichtung, die in ihrer Nähe ein Flüssigkeitsvolumen (23, 83) definiert, daß mit einer Pumpenvorrichtung (24a, 24b, 86), die in dem Flüssigkeitsvolumen einen Unterdruck erzeugt, in Verbindung steht, wobei das Flüssigkeitsvolumen in direkter hydraulischer Verbindung mit einer Seite der porösen Saugoberflächenstruktur steht, dadurch gekennzeichnet, daß die Radien R der Poren der porösen Saugoberflächenstruktur hauptsächlich innerhalb des Bereiches von 0,05 μm bis 2 μm liegen.

5. Vorrichtung nach Anspruch 4, dadurch gekennzeichnet, daß in Verbindung mit dem zu trocknenden Material (W) eine Strahlungsvorrichtung (45, 55) vorgesehen ist, mittels der auf das Material eine Strahlung, die in einem Wellenlängenbereich, der von dem festen Stoff des zu trocknenden Materials absorbiert wird, eine hohe Intensität aufweist, gerichtet ist.

6. Vorrichtung nach Anspruch 4 oder 5, gekennzeichnet durch ein poröses durchlässiges Element, z.B. ein elastisches, durchlässiges Gummiband, Tuch oder entsprechendes (46, 56, 62, 84), das als eine Presse dient, mittels der das zu trocknende Material (W, 63, 81) dicht gegen die poröse Saugoberflächenstruktur (64, 82) gedrückt wird.

7. Vorrichtung nach Anspruch 4, 5 oder 6, dadurch gekennzeichnet, daß die poröse Saugoberflächenstruktur (22, 64, 82) aus einem Sinterfilm oder einem mikroporösen Nylon-film oder ähnlichem besteht, der eine Filmdicke von weniger als etwa 1 Millimeter aufweist.

8. Vorrichtung nach Anspruch 4, 5, 6 oder 7, zur Trocknung des porösen gewebeartigen Materials, gekennzeichnet durch mindestens einer Zylinder (20, 41, 42, 43; 51, 52, 53; 85), dessen äußere Oberfläche mit der porösen Saugoberflächenstruktur (22; 82) versehen ist, auf deren Innenseite das Flüssigkeitsvolumen (23; 83) vorgesehen ist, das mit der Pumpenvorrichtung (24a, 24b; 86) verbunden ist, und durch Verbindungselemente (25a, 25b, 26), die eine Verbindung zu einem Wasser-Drainagekanal (27) bilden.

9. Vorrichtung nach Anspruch 8, dadurch gekennzeichnet, daß in dem Sektor des Zylinders (42, 52), in dem das zu trocknende Material (W) an der Zylinderoberfläche anliegt, eine Überdruckkammer (44; 54) vorgesehen ist.

10. Vorrichtung nach Anspruch 8 oder 9, dadurch gekennzeichnet, daß in dem Sektor des Zylinders (20), in dem das Material (W) nicht anliegt, eine Wasserdüsenvorrichtung (30) vorgesehen ist, mittels der die poröse Saugoberflächenstruktur (22) gereinigt wird (Figuren 4a und 4b).

11. Vorrichtung nach Anspruch 9 oder 10, dadurch gekennzeichnet, daß in Richtung des Verlaufs des Materials gesehen ein erster, ein zweiter und ein dritter Zylinder (41, 42, 43; 51, 52, 53) vorgesehen ist, wobei der erste Zylinder (41; 51) ein Wasserabsaug-Zylinder ohne Verstärkung, der zweite Zylinder (42; 52) eine druckluftverstärkter Zylinder und der dritte Zylinder (43; 53) ein Wasserabsaug-Zylinder, der mit Infrarotstrahlung verstärkt ist, ist.

12. Vorrichtung nach Anspruch 11, dadurch gekennzeichnet, daß an dem zweiten und/oder dritten Zylinder (42, 43; 52, 53) ein durchlässiges Tuch oder Band (46; 56) verwendet wird, mittels dessen das Material (W) gegen die poröse Saugoberflächenstruktur dieses Zylinders (42, 43; 52, 53) gedrückt wird.

**Revendications**

1. Procédé pour sécher un matériau en bande poreux tel que du papier, une boue telle que de la tourbe, un matériau solide tel que du bois, dans lequel le matériau à sécher est placé sur un de ses côtés en liaison hydraulique avec un liquide en dépression par rapport au matériau à sécher au moyen d'une structure à surface d'aspiration poreuse saturée en liquide de façon permanente, caractérisé en ce que de l'air ou un gaz est admis pendant le séchage sur l'autre côté du matériau, et en ce que la dimension des pores et la structure de ladite surface d'aspiration poreuse sont choisies de manière que ladite dépression ne suffise pas à vider la structure à surface d'aspiration poreuse du liquide à l'encontre des forces capillaires agissant à l'intérieur de ladite structure à surface d'aspiration poreuse, même quand le gaz ou l'air est en contact direct avec ladite structure à surface d'aspiration poreuse (26; 64; 82).

2. Procédé selon la revendication 1, caractérisé en ce que l'action d'aspiration et de séchage est amplifiée par une surpression agissant sur l'autre côté du matériau à sécher.

3. Procédé selon l'une des revendication 1 et 2, caractérisé en ce que l'action de séchage est amplifiée en dirigeant sur le matériau à sécher un rayonnement qui est absorbé dans ledit matériau.

4. Moyen pour mettre en outre le procédé de séchage d'un matériau en bande poreux tel que du papier, une boue telle que de la tourbe, un matériau solide tel que du bois, selon la revendication 1, comprenant une structure à surface d'aspiration poreuse (22; 64; 82) qui est saturée en liquide de façon permanente pour venir en contact avec un côté dudit matériau et des moyens qui définissent dans leur voisinage immédiate un volume de liquide (23; 83) qui communique avec un moyen de pompage (24; 24b; 86) créant une dépression dans ledit volume de liquide, ledit volume de liquide étant en liaison hydraulique directe avec un côté de ladite structure à surface d'aspiration poreuse, caractérisé en ce que les rayons R des pores de ladite structure à surface d'aspiration poreuse sont compris dans la fourchette allant de 0,05 µm à 2 µm.

5. Moyen selon la revendication 4, caractérisé en ce que des moyens de rayonnement (45; 55) sont prévus en liaison avec le matériau (W) à sécher, moyens par lesquels un rayonnement de forte intensité dans une plage de longueurs d'ondes qui est absorbée par la matière solide dudit matériau à sécher est dirigé sur ledit matériau.

6. Moyen selon la revendication 4 ou 5, caractérisé par un élément perméable et poreux, par exemple une bande en caoutchouc, un tissu ou équivalent, perméable et élastique (46; 56; 62; 84) servant de presse au moyen de laquelle le matériau (W; 63; 81) à sécher est sollicité étroitement contre la structure à surface d'aspiration poreuse (64; 82).

7. Moyen selon la revendication 4, 5 ou 6, caractérisé en ce que la structure à surface d'aspiration poreuse (22; 64; 82) consiste en un film fritté ou un film de nylon microporeux ou équivalent, ayant une épaisseur de film inférieure à environ 1 mm.

8. Moyen selon la revendication 4, 5, 6 ou 7 pour sécher un matériau en bande poreux, caractérisé par au moins un cylindre (20, 41, 42, 43; 51, 52, 53; 85) dont la surface extérieure a été munie de ladite structure à surface d'aspiration poreuse (22; 82) sur le côté interne de laquelle est retenu ledit volume de liquide (23; 83) relié audit moyen de pompage (24a, 24b; 86), et par des raccords (25a; 25b; 26) établissant une liaison avec un passage de drainage d'eau (27).

9. Moyen selon la revendication 8, caractérisé en ce qu'une chambre de surpression (44; 54) est montée sur le secteur dudit cylindre (42; 52) sur lequel le matériau (W) à sécher passe sur la surface du cylindre.

10. Moyen selon la revendication 8 ou 9, caractérisé en ce que des moyens à jet d'eau grâce auxquels la structure à surface d'aspiration poreuse (22) est nettoyée sont prévus sur le secteur dudit cylindre (20) sur lequel ne passe pas ledit matériau (W) (Figs. 4a et 4b).

11. Moyen selon la revendication 9 ou 10, caractérisé en ce que, vus dans la direction du parcours dudit matériau, sont prévus un premier, un second et un troisième cylindres (41, 42, 43; 51, 52, 53), le premier cylindre (41; 51) étant un cylindre d'aspiration d'eau sans amplification, le second cylindre (42; 52) étant un cylindre à action amplifiée par de l'air comprimé, le troisième cylindre (43; 53) étant un cylindre d'aspiration d'eau à action amplifiée par radiations infrarouges.

12. Moyen selon la revendication 11, caractérisé en ce qu'on utilise sur le second et/ou le troisième cylindre (42, 43; 52, 53) un tissu ou une bande perméable (46; 56) au moyen duquel ou de laquelle le matériau (W) est sollicité contre la structure à surface d'aspiration poreuse de ce cylindre (42, 43; 52, 53).

Abs. pressure
of water

1.0
bar

Air pressure 1 bar

0.5

0

-0.5

0          0.5          1.0          1.5 $u_v$

$(g\,H_2O$ per g
of dry matter)

FIG.1

10

$P_w$

12

13

14

16

17          15          FIG.2

FIG. 3

FIG. 4a

FIG. 4b

2

# 0 055 725

FIG. 5

FIG. 6a

FIG. 6b

FIG. 7a

FIG. 7b

FIG. 8

Transmittance (%)

1=Dry newsprint
2=Distilled water

FIG. 9

FIG.10

Suction pressure
(kPa)

Overpressure
0.2 bar

Overpressure
2.0 bar

$U_v$ (g $H_2O$ per g
of dry matter)

FIG.11

5

FIG.12

FIG.13

FIG.14